# EUROPÄISCHE PATENTANMELDUNG

(11) **EP 3 085 431 A1**
(43) Veröffentlichungstag der Anmeldung: **26.10.2016**
(21) Anmeldenummer: 15001227.6
(22) Anmeldetag: 24.04.2015
(51) Int. Cl.: B01D 53/56, B01D 53/86, C04B 7/36

(54) **BEHANDLUNG VON ABGASEN DER ZEMENTHERSTELLUNG**

(71) Anmelder: HeidelbergCement AG, 69120 Heidelberg (DE)
(72) Erfinder: Federhen, Stefan, 69493 Hirschberg (DE)
(74) Vertreter: Wagner, Jutta

(57) **Zusammenfassung**

Verfahren zur Reinigung von Abgas aus der Herstellung von Zementklinker in einem Drehrohrofen, bei dem Rohstoffe in einer Mühle zu Rohmehl gemahlen werden, Rohmehl in einem Vorwärmer mit Abgas aus dem Drehrohrofen im Gegenstrom vorgewärmt und optional vorkalziniert wird, vorgewärmtes und ggfs. vorkalziniertes Rohmehl dem Drehrohrofen zugeführt und im Drehrohrofen zu Zement gebrannt wird, das Abgas aus dem Drehrohrofen vor dem Eintritt in den Vorwärmer einer selektiven, nicht-katalytischen Stickoxidreduktion mit einem Reagenz, welches Ammoniak bereitstellt, entstickt wird und wobei erfindungsgemäß das Abgas aus dem Vorwärmer einer Gaskonditionierung und katalytischen Oxidation von Ammoniak unterzogen wird. Die Aufgabe wird weiter durch eine Vorrichtung zur Gaskonditionierung und katalytischen Oxidation gelöst, welche zwischen Vorwärmer und Mühle angeordnet wird.

## Beschreibung

Die vorliegende Erfindung betrifft ein Verfahren und eine Vorrichtung zur Behandlung von Abgasen, die bei der Herstellung von Zementklinker in einem Drehrohrofen anfallen.

Die Zementherstellung durch Brennen von Rohmehl zu Klinker erfordert hohe Temperaturen, bei denen sich die Entstehung verschiedener Schadstoffe, vor allem von Stickoxiden, nicht verhindern lässt. Im Hinblick auf die immer niedrigeren Grenzwerte für die Emission von Schadstoffen wurde eine Vielzahl an Verfahren entwickelt, um diese aus dem Abgas zu entfernen. Die folgenden Vorschläge veranschaulichen den Stand der Technik vor allem in Bezug auf die Entstickung.

Ein erster Ansatz besteht in der Umsetzung der Stickoxide, NO und NO₂, zusammenfassend als NOₓ bezeichnet, mit Ammoniak- oder Harnstofflösung, typischerweise bei 900 bis 1000 °C. Dieses Verfahren wird als selektive nichtkatalytische Reduktion, kurz SNCR, bezeichnet. Ein Beispiel hierfür ist WO 2012/17616 A1, die ein Verfahren beschreibt, bei dem als Reagenz Ammoniak oder eine Ammoniak freisetzende Verbindung wie Harnstoff der Rohmehl-Vorwärmung zugeführt wird. Zur Verbesserung der Vermischung wird Abgas aus der Vorwärmung abgezogen, entstaubt und diesem dann das Reagenz zugefügt. Das entstaubte und mit Reagenz beladene Gas wird dann in den Vorwärmer zurückgeführt.

Eine wirksamere Entstickung gelingt mit Hilfe der selektiven, katalytischen Reduktion, kurz SCR. Als Reagenz wird ebenfalls Ammoniak, ggfs. in-situ aus diesen freisetzenden Verbindungen erzeugt, verwendet. Die Umsetzung erfolgt an Katalysatoren die vorwiegend aus Titandioxid bestehen und mit Vanadiumpentoxid und Wolframtrioxid dotiert sind. Ein Beispiel ist die CN 102698600 A, gemäß der das Abgas aus der Rohmehl-Vorwärmung zumindest teilweise durch einen entsprechenden Katalysator geführt wird. In der DE 10 2011 001 773 A1 wird vorgeschlagen, auch die Abgase aus einer Vortrocknung von alternativen Brennstoffe demselben Katalysator zuzuführen, so dass darin enthaltene kohlenstoffhaltige Geruchsstoffe und Ammoniak ebenfalls am Katalysator umgesetzt werden.

Sowohl bei der SNCR als auch der SCR besteht ein Problem darin, dass für eine weitgehende Umsetzung der Stickoxide ein Ammoniaküberschuss notwendig ist. Im Allgemeinen gilt, je geringer der Emissionsgrenzwert, desto höher muss der Überschuss sein. Ein zu hoher Überschuss führt aber dazu, dass nach der Reduktionsreaktion unreagiertes Ammoniak im Abgas enthalten ist, sog. Ammoniak-Schlupf, was nur begrenzt zulässig ist. Zur Lösung des Problems wird in der US 5,510,092 A vorgeschlagen, das Abgas im Wesentlichen mittels SCR zu reinigen und nur bei Feststellung einer zu hohen NOₓ-Konzentration im Abgas in einer SNCR-Zone zusätzlich Ammoniak einzubringen. Dadurch soll eine sichere Einhaltung sehr niedriger Stickoxidgehalte im Abgas gewährleistet werden, ohne dass ein großer Überschuss Ammoniak nötig ist und ins Abgas gelangen kann.

Ein weiterer Vorschlag zur Abgasreinigung findet sich in der DE 10 2011 001 933 A1. Zur Entstickung wird der Einsatz der SCR im Abgas der Rohmehl-Vorwärmung empfohlen. Zusätzlich soll das Abgas aus der Rohmaterialmühle, in der die Rohstoffe zu Rohmehl gemahlen werden, mit Alkalihydrogencarbonat und/oder Alkalicarbonat behandelt werden, um saure Schadstoffe wie Schwefeloxide, Chlor- und Fluorwasserstoff zu entfernen. Dadurch soll auch eine Reduktion des Quecksilbergehaltes erreicht werden.

Die US 2009/0252665 A1 beschreibt für die Reinigung von Abgas aus Dampfkesseln, Heizaggregaten, Öfen und anderen Abgaserzeugenden Vorrichtungen eine Kombination von katalytischer oder nicht-katalytischer Reduktion der Stickoxide mit einem anschließenden katalytischen Abbau von überschüssigem Ammoniak. Hinweise, wie dieses Verfahren bei der Zementherstellung angewendet werden könnte, werden nicht gegeben.

Bei der Zementherstellung ergeben sich jedoch neben der Entstickung weitere Anforderungen. Das Abgas aus der Vorwärmung wird in der Regel in die Rohmaterialmühle geleitet, eine Entstaubung findet erst im Abgasstrom aus der Mühle an einem dem Abgasaustritt vorgeschalteten Filter statt. Um die Mühle und diesen Hauptabgasfilter zu schützen, muss das Abgas je nach Zusammensetzung der Rohstoffe und des Brennmaterials entsäuert werden, was üblicherweise in einer Gasreinigung durch Zufuhr von Calciumhydroxid erfolgt. Schwefeloxide und andere saure Gase werden so wirksam aus dem Abgas entfernt. Würde man saure Abgase in den Hauptfilter gelangen lassen, käme es ggfs. zu massiver Korrosion, insbesondere im Reingasbereich.

Eine weitere, spezielle Problematik besteht darin, dass während der Vorwärmung des Rohmehls im Wärmetauscher im Rohmaterial enthaltenes Ammoniak zusätzlich freigesetzt wird. In der Regel werden Ammoniak aus der SNCR und rohmaterialbedingtes Ammoniak in der Rohmaterialmühle an dem Rohmehl angelagert. Ammoniak akkumuliert sich dann im System zwischen Vorwärmer und Rohmaterialmühle und Rohmehlsilo. Diie Rohmaterialmühle wird im Schnitt nur etwa 85 % der Zeit betrieben, die der Drehrohrofen arbeitet. In der Zeit, in der die Mühle nicht betrieben wird, sog. Direktbetrieb, gelangt das Abgas aus dem Vorwärmer direkt in den Hauptfilter. Dadurch gelangt vermehrt Ammoniak ins Abgas, da dieses nicht mehr in der Mühle am Rohmehl adsorbiert wird. In der Zeitspanne des Direktbetriebes wird zusätzlich das zuvor abgeschiedene und akkumulierte Ammoniak freigesetzt und es kommt zu zeitlich begrenzten aber hohen Ammoniakemissionen. Der Anteil an Direktbetrieb kann im Einzelfall bis zu 30 % oder auch nur 5% der Ofenbetriebszeit betragen.

Die Aufgabe der Reinigung von Abgasen der Zementherstellung, bei der sowohl die immer weiter gesenkten Grenzwerte eingehalten werden können, als auch die Kosten und der Energiebedarf akzeptabel bleiben, ist daher noch immer nicht vollständig gelöst.

Überraschend wurde nun gebunden, dass sich bei der Zementherstellung eine sehr effiziente Abgasreinigung erreichen lässt, wenn man die Entstickung mittels SNCR mit einem ausreichend hohen Überschuss an Reagenz durchführt und die Abgase aus der Vorwärmung einer kombinierten Gaskonditionierung und katalytischen Oxidation unterzieht.

Die obige Aufgabe wird daher durch ein Verfahren zur Reinigung von Abgas aus der Herstellung von Zement in einem Drehrohrofen gelöst, bei dem Rohstoffe in einer Mühle zu Rohmehl gemahlen werden, Rohmehl in einem Vorwärmer mit Abgas aus dem Drehrohrofen im Gegenstrom vorgewärmt und optional vorkalziniert wird, vorgewärmtes und ggfs. vorkalziniertes Rohmehl dem Drehrohrofen zugeführt und im Drehrohrofen zu Zementklinker gebrannt wird, das Abgas aus dem Drehrohrofen vor dem Eintritt in den Vorwärmer einer selektiven, nicht-katalytischen Reduktion mit einem Reagenz, welches Ammoniak bereitstellt, entstickt wird und wobei erfindungsgemäß das Abgas aus dem Vorwärmer einer Gaskonditionierung und katalytischen Oxidation unterzogen wird. Die Aufgabe wird weiter durch eine Vorrichtung zur Gaskonditionierung und katalytischen Oxidation gelöst, welche in einer Anlage zur Herstellung von Zementklinker umfassend eine Mühle, in der Rohstoffe zu Rohmehl gemahlen werden, einen Vorwärmer, in dem das Rohmehl mit Abgas aus einem Drehrohrofen im Gegenstrom vorgewärmt und optional vorkalziniert wird, den Drehrohrofen, in dem das vorgewärmte und ggfs. vorkalzinierte Rohmehl zu Zementklinker gebrannt wird, und einen Abschnitt zwischen Drehrohrofen und Vorwärmer, in dem Stickoxide mit einem Reagenz, welches Ammoniak bereitstellt, reduziert werden, erfindungsgemäß zwischen Mühle und Vorwärmer angeordnet ist. Die Gaskonditionierung kann vorteilhaft eine Gasreinigung mit alkalischen Substanzen, vorzugsweise Calciumhydroxid, umfassen.

Die Anlage zur Zementherstellung entspricht weitgehend den an sich bekannten Anlagen, daher werden die bekannten Teile hier nicht im Detail beschrieben. Eine detaillierte Beschreibung findet sich zum Beispiel in W.H.Duda; Internationale Verfahrenstechniken der Zement Industrie, Band 1 bis 3, 1985, Bauverlag Wiesbaden und Berlin.

Erfindungsgemäß ist zum einen eine an sich bekannte SNCR vorgesehen. Diese wird, um die gewünschte Reaktionstemperaturvon 830°C bis 970°C einzuhalten, zwischen Drehrohrofen und Vorwärmer angeordnet. Durch die SNCR werden Stickoxide, welche sich im Drehrohrofen bzw. bei der Verbrennung der Brennstoffe gebildet haben oder aus dem Rohmaterial stammen, durch Zugabe von Ammoniak oder einer Ammoniak freisetzenden Verbindung als Reagenz zu Stickstoff reduziert. Bevorzugt kommen Ammoniak oder Harnstoff als Reagenz zum Einsatz, insbesondere als wässrige Lösung. Das Verhältnis von Reagenz zu Stickoxiden und der Aufgabepunkt werden so gewählt, dass eine möglichst vollständige Umsetzung der Stickoxide erfolgt. Geeignet sind zum Beispiel Molverhältnisse Reagenz, berechnet als Ammoniak, zu Stickoxiden von 1,1 bis 2,5, bevorzugt von 1,3 bis 1,6. Erfindungsgemäß muss weniger Rücksicht auf einen möglichen Ammoniak-Schlupf genommen werden, als im Stand der Technik. Damit ist eine weitgehende Umsetzung möglich, ohne dass ein SCR-Katalysator nötig ist, was die Anlagenkosten begrenzt. Stickoxidgehalte im Abgas von < 200 mg/m³ und sogar 150 mg/m³ werden regelmäßig erreicht.

Die SNCR erfolgt an einer Stelle der Anlage, wo die Abgase eine geeignete Temperatur haben, beispielsweise von 800 bis 1000 °C, vorzugsweise von 830 bis 950 °C. Dadurch wird keine zusätzliche Energie für die SNCR benötigt und der Anteil an Ammoniak, welches ansonsten reduktionsunwirksam wäre und gegebenenfalls selbst zu NOₓ verbrennt, gering gehalten.

Erfindungsgemäß wird außerdem eine selektive katalytische Oxidation (SCO) und Gaskonditionierung (GK) zwischen dem Vorwärmer und der Mühle angeordnet. Für den Direktbetrieb befindet sich der Abzweig für die Umgehung der Mühle nach der Gaskonditionierung mit katalytischer Oxidation, so dass dem Hauptabgasfilter nur Abgas zugeführt wird, welches erfindungsgemäß sowohl mit SNCR als auch mit SCO und GK behandelt worden ist.

Die katalytische Oxidation dient dazu, das SNCR- und auch das rohmaterialbedingte Ammoniak im Abgas zu Stickstoff zu oxidieren. Geeignete Katalysatoren sind dem Fachmann bekannt, sie werden z.B. in der Abgasbehandlung bei der Düngemittelherstellung verwendet. Die für die SCR genutzten Katalysatoren auf Basis von mit Vanadiumpentoxid oder Wolframtrioxid dotiertem Titandioxid-Katalysatorgrundkörper können ebenfalls verwendet werden, jedoch ist es bevorzugt die Aktivität durch Zusatz von Edelmetallen wie Palladium, Rhodium und Platin sowie von Kupfer oder Magnesium zu steigern. Die optimale Temperatur der Abgase bei der Oxidation liegt im Bereich von 275 bis 380 °C.

Die Katalysatoren oxidieren vorteilhaft auch weitere vorhandene Schadstoffe. So wird Quecksilber, welches in elementarer Form schwer aus dem Abgas zu entfernen ist, oxidiert und kann so im Hauptfilter effektiver abgetrennt werden. Schwefeldioxid wird zu Schwefeltrioxid oxidiert, welches viel leichter als SO₂ mittels Trockensorption oder Semitrockensorption gebunden werden kann. Wie bereits erwähnt, kann die Reinigungswirkung in Bezug auf Schwefeloxide durch eine Gasreinigung mit alkalischen Substanzen noch weiter optimiert werden. Weiterhin werden volatile mittel bis langkettige Kohlenwasserstoffe, sogenannte Volatile Organic Compounds (VOC), zu H₂O und CO₂ oxidiert.

Die Gaskonditionierung des Abgases wird vor allem benötigt um das Abgas für nachgeschalteten Staubabscheideapparate, wie zum Beispiel Schlauchfilter oder elektrische Abscheider, in Temperatur und Gasfeuchtigkeit auf den jeweils optimalen Bereich einzustellen. Damit kann man die Staub- und Gaseigenschaften positiv beeinflussen und somit die Anlagen- und Betriebskosten der Entstauber reduzieren.

Die katalytische Oxidation und Gaskonditionierung finden erfindungsgemäß an einem staubhaltigen Abgas statt. Im Stand der Technik wird für eine erfolgreiche SCR teilweise eine vorherige Entstaubung für nötig gehalten. Dies ist erfindungsgemäß nicht notwendig. Allerdings ist es bevorzugt, den Katalysator von Zeit zu Zeit mit Druckluft freizublasen. Dazu wird vorzugsweise eine rotierende Einheit mit versetzten und im Querschnitt variierenden Düsen verwendet. Der Druck kann bei hohen Druckluftströmungsraten bis hinab zu 0,8 bar betragen, bei niedrigen Druckluftströmungsraten sind bis hinauf zu 6 bar, maximal 8 bar geeignet. Die rotierende Einheit kann durch die Druckluft angetrieben werden, oder mechanisch durch einen Kegelradantrieb. Die Lagerung ist zweckmäßig aus keramischem Material, vorzugsweise aus Siliziumkarbid, und Luftgespült. Eine Hartmetalllagerung ist ebenfalls möglich. In jedem Fall sollte die Lagerung frei von Schmiermittel sein, welches sich bei der hohen Anwendungstemperatur schmierunwirksam zersetzt.

Es ist außerdem vorteilhaft, die Druckluft auf mindestens 150 °C, vorzugsweise auf 170 bis 275 °C, maximal aber 300 °C vorzuheizen. Dadurch lassen sich Ablagerungen verhindern, die sich sonst auf der aktiven Oberfläche durch eine Schockkühlung und die dazu parallel ablaufenden, chemischen Reaktionen der Gasbestandteile bilden.

In einer besonders bevorzugten Ausgestaltung wird die Druckluft in einem Wärmetauscher durch die Abgase vorgeheizt. Der Wärmetauscher wird dabei je nach Abgastemperatur vor oder nach dem Oxidationskatalysator, in jedem Fall jedoch vor der Gaskonditionierungsstufe, angeordnet. Liegt die Abgastemperatur über 350 °C erfolgt der Wärmetausch vorzugsweis vor dem Katalysator, liegt sie unter 330 °C erfolgt der Wärmetausch bevorzugt nach der katalytischen Oxidation.

Die Strömungsgeschwindigkeit des Abgases vor dem Oxidationskatalysator liegt zweckmäßig im Bereich von 2,5 bis 4,5 m/s, innerhalb des Katalysators bei 4 bis 9 m/s. Bei Strömungsgeschwindigkeiten nahe der Geschwindigkeitsobergrenzen ist eine gehärtete Oberfläche am Einlauf, z.B. auf einer Länge von 40 mm, empfehlenswert. Ansonsten führen die genannten Geschwindigkeitsbereiche zu einem wenig abrasivem Betrieb.

Zur Vermeidung einer Kondensation von Wasser und der sich daraus bildenden dauerhaften Ablagerungen ist eine Umgehung des Katalysators während des Betriebsbeginns hilfreich. Typischerweise beträgt der Volumenstrom hierbei weniger als 20 % des Normalbetriebvolumenstroms. Es ist weiter bevorzugt, während Stillstandzeiten den Oxidationskatalysator auf >140 °C zu beheizen. Dies kann vorzugweise durch eine Umluftstillstandsheizung erfolgen.

Es ist ganz besonders bevorzugt, die Gaskonditionierung und katalytische Oxidation in einem gemeinsamen Gehäuse anzuordnen. Die kombinierte Vorrichtung wird in Abhängigkeit vom benötigten Gasstromvolumen und den Bedingungen dimensioniert. Praktikable Durchmesser von 4 bis 9 m erlauben Gasstrangströme von bis zu 400.000 m³/h (Normzustand).

Die kombinierte Gaskonditionierung und katalytische Oxidation umfasst in Strömungsrichtung des Gases vorzugsweise die folgenden Komponenten:
- einen Gaseinlassbereich, bevorzugt mit einem Ausgleichsverteiler
- ggfs. die rotierende Einheit für die Druckluftreinigung des Katalysators
- den Katalysator
- einen Gaskonditionierungsabschnitt.
Optional ist für die Druckluftreinigung vor der rotierenden Einheit oder nach dem Katalysator ein Wärmetauscher zum Vorheizen der Druckluft angeordnet. Am Gasauslass kann eine Staubabführung vorgesehen werden.

Der Katalysator besteht in der Regel aus Einzelkassetten, in denen die Katalysatorelemente zusammengefasst werden. Zweckmäßig haben die Kassetten die Form von gleichseitigen Dreiecken, mit an den Radius des Gehäuses angepassten Kassettenseitenlängen. Idealerweise haben auch die Katalysatoreinzelelemente Formen mit ebenfalls gleichseitiger dreieckiger Grundfläche. Dadurch und durch die Anwendung von im Kreis angeordneten Katalysatorkassetten, werden die Staubablagerungsflächenminimiert. Die typischen Abmessungen der Einzelkatalysatorelemente sind 150 mm Seitenkantenlänge und 500 bis 1300 mm Elementlänge. Diese Katalysatoreinzelelemente sind somit mit üblichen Katalysatorherstellungsmatrizen herstellbar. Die Katalysatorkassetten, welche die Einzelelemente aufnehmen, lassen variable Seitenlängen zu, beispielsweise 1450 mm. Ein solches Maß lässt ein Kassette aus 81 Einzelelementen bestehen mit einem Katalysatorvolumen je Kassette von 1,2 m³.

Die Gaskonditionierung erfolgt üblicherweise durch Zufuhr von Konditionierungswasser, welches in der Regel in das Abgas in einen sogenannten Verdampfungskühler eingedüst wird. In diesem üblichen Verfahrensschritt erfolgt eine Einstellung der Gasfeuchte und Temperatur. Die bevorzugte Gasreinigung erfolgt durch Zugabe von aufgeschlämmtem Calciumhydroxid. Die Dispergierung der Absorptionslösung in das zu reinigende Gas wird vorteilhaft mittels einer mit Druckluft beaufschlagten Zweistoffdöse erreicht. Dabei wird die Absorptionslösung zusammen mit dem normalen und kühlenden Konditionierungswasser vermischt zugegeben, womit sich dann auch Kühlwasserbilanz nicht verändert und auch die notwenige Gasfeuchte und Temperatur hinreichend eingestellt wird.

Der Wärmetauscher zur Vorwärmung der Druckluft für die Reinigung des Katalysators befindet sich im Gasstrom vor oder nach der Katalysatorebene. Dabei wird die zunächst kalte Druckluft durch schlangenförmig angeordnete Röhren geleitet und nimmt dabei an Temperatur zu. Der sich an den Röhren ablagernde Staub wird in periodischen Abständen mittels Klopfschlägen oder Vibration abgeworfen. Für den Staubabwurf wird die Rohrschlange in Schwingung versetzt. Die Amplitude beträgt dabei nur wenige Millimeter. Diese Amplitude ist dennoch ausreichend um die notwendigen Scherkräfte zu mobilisieren, welche in der Folge die Kohäsions- und Adhäsionskräfte des Staubkuchens überschreiten und diesen dann in Gasrichtung abwerfen. Um die Eigenresonanz und die damit verbundene Schwingung der Röhren zu gewährleisten, ist ein Mindestmaß Rohrschlangenlänge nicht zu unterschreiten. Des Weiteren sind die Rohschlangen freischwingend aufzuhängen. Üblicherweise beträgt die dämpfungsfreie Rohrschlangeneinzelweglänge je nach Anordnung zwischen 4 und 12 m. Die verwendeten Rohre haben typischerweise bei einer Wandstärke von 4 bis 8 mm einen Durchmesser von 75 bis 150 mm.

Eine dezidierte Vorentstaubung erfolgt erfindungsgemäß vorzugsweise nicht und die Staubkonzentration nach den Vorwärmertauscherzyklone kann im üblichen Rahmen auch 100 g/m³ (Normzustand) betragen. Zur Endentstaubung der gereinigten und konditionierten Abgase nach dem Reaktor und der Mühle kommen an sich bekannte Staubabscheider, zum Beispiel Schlauchfilter, zum Einsatz. Auch elektrische Staubabscheider können eingesetzt werden.

Die Erfindung soll anhand der beigefügten Figuren näher erläutert werden, ohne jedoch auf die speziell beschriebenen Ausführungsformen beschränkt zu sein. Die Erfindung bezieht sich auch auf sämtliche Kombinationen von bevorzugten Ausgestaltungen, soweit diese sich nicht gegenseitig ausschließen.

Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Es zeigt:
Figur 1 eine schematische Übersicht des erfindungsgemäßen Verfahrens
Figur 2 eine schematische Darstellung einer Anlage zur Zementherstellung
Figur 3 eine erfindungsgemäße Vorrichtung zur Gaskonditionierung und katalytischen Oxidation.

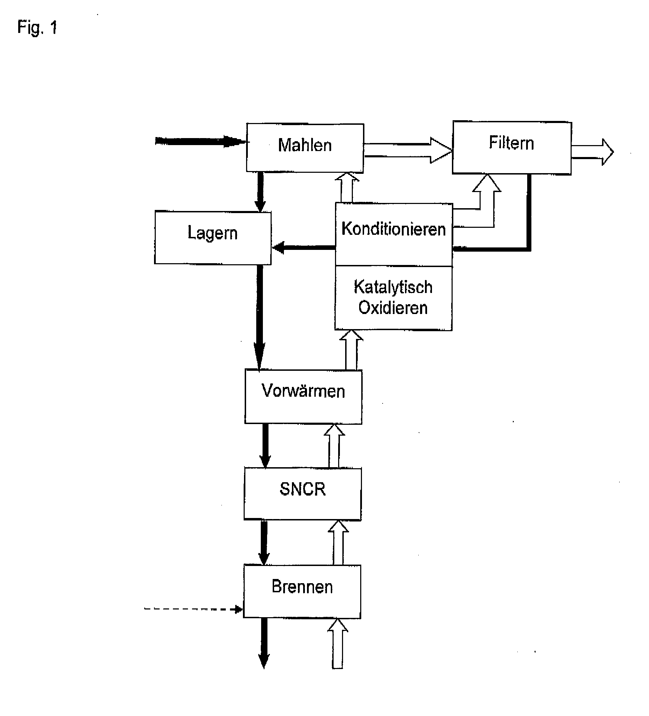

Figur 1 verdeutlicht die Verfahrensschritte. Die Feststoffströme sind mit gefüllten Pfeilen, die Gasströme mit offenen Pfeilen dargestellt. In an sich bekannter Weise werden Rohstoffe in einer Mühle gemahlen. Das erzeugte Rohmehl wird einer Vorwärmung zugeführt, wobei in der Regel eine Lagerung in einem Rohmehlsilo zwischengeschaltet ist. Die Vorwärmung kann eine Vorkalzination einschließen. Das vorgewärmte und ggfs. vorkalzinierte Rohmehl wird dem Drehrohrofen zugeführt, wo es zu Zementklinker gebrannt wird. Die anschließenden Schritte Abkühlung, Mahlung usw. sind nicht dargestellt. Zum Brennen des Rohmehls im Ofen wird Brennstoff zugeführt (gestrichelter Pfeil) und verbrannt. Sowohl dabei als auch im gesamten heißen Bereich des Ofens entstehen Stickoxide aus Sauerstoff und Stickstoff. Im Ofen strömt Luft im Gegenstrom zum Rohmehl, so dass das Stickoxide und andere Schadstoffe enthaltende heiße Abgas den Ofen an der Stelle verlässt, wo das Rohmehl aufgegeben wird. Von dort wird es zur Vorwärmung geleitet, wobei es erfindungsgemäß mit dem Reagenz für die SNCR versetzt wird. In der Vorwärmung erwärmt das entstickte Abgas das Rohmehl und wird dann in die Gaskonditionierung und katalytische Oxidation geleitet. Dort wird Ammoniak zu Stickstoff oxidiert und ggfs. weitere Schadstoffe oxidiert und/oder durch eine Gasreinigung entfernt. Das entstickte und von Ammoniak weitgehend befreite Abgas wird entweder in die Mühle geführt oder in den Abgasfilter, der hinter der Mühle angeordnet ist.

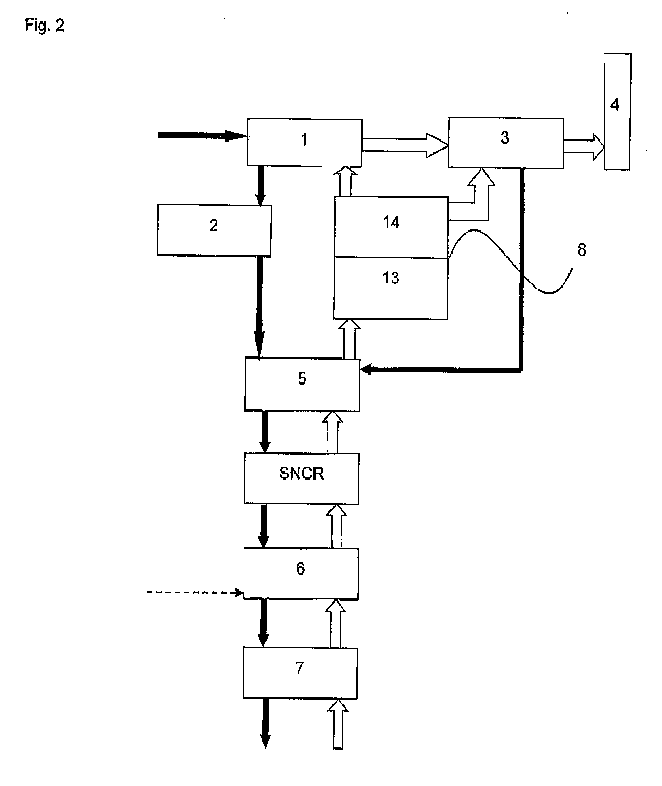

Figur 2 veranschaulicht eine typische Anlage zur Zementherstellung. Rohstoffe werden einer Mühle 1 zugeführt, wo sie zu Rohmehl gemahlen werden. Das Rohmehl gelangt in eine Silo 2, das Abgas aus der Mühle in einen Filter 3. Im Filter 3 abgeschiedener Staub wird dem Rohmehl zugeführt oder einer weiteren Verwendung zugeführt. Das im Filter 3 gereinigte Abgas wird durch einen Kamin 4 abgeführt. Das Rohmehl wird aus dem Silo 2 In einen Vorwärmer 5 geführt. Der Vorwärmer wird typischerweise von einem 4- bis 6-stufigen Zyklonwärmetauscher gebildet. Im Vorwärmer 5 wird das Rohmehl durch heißes Abgas aus dem Drehrohrofen 6 erwärmt, das Abgas wird gekühlt. In manchen Anlagen erfolgt nicht nur eine Vorwärmung sondern, meist unter Zufuhr zusätzlicher Energie, eine Vorkalzinierung. Das Rohmehl, das auf diese Weise vorgewärmt und ggfs. auch vorkalziniert ist, wird dem Drehrohrofen 6 zugeführt und dort nach und nach so weit erwärmt, dass es zu Zementklinker gesintert wird. Der Zementklinker wird teilweise bereits im Ofenaustritt, jedenfalls aber im Klinkerkühler 7 durch Zufuhr von Luft gekühlt. Die dadurch erwärmte Luft wird als Verbrennungsluft im Ofen 6 genutzt und verlässt diesen als Abgas an der Stelle, wo das Rohmehl zugeführt wird. Erfindungsgemäß wird dem Abgas vor dem Eintritt in den Vorwärmer 5 ein Reagenz zugeführt, welches Ammoniak zur nicht-katalytischen Reduktion von Stickoxiden bereitstellt. Das entstickte Abgas wird dem Vorwärmer 5 zugeführt und erwärmt das Rohmehl. Es wird erfindungsgemäß aus dem Vorwärmer 5 in eine Vorrichtung 8 zur Gaskonditionierung und katalytischen Oxidation geleitet. Die Vorrichtung 8 kann als zwei getrennte Vorrichtungen ausgebildet werden, vorzugsweise handelt es sich um eine einheitliche Vorrichtung. In der Vorrichtung 8 wird das Abgas zunächst mit einem Oxidationskatalysator in Kontakt gebracht. Anschließend erfolgt die Gaskonditionierung, bei der zumindest eine Einstellung von Temperatur und Feuchtigkeit des Abgases, vorzugsweise auch eine Gasreinigung, erfolgt. Vorzugsweise wird das Abgas mit einer wässrigen Lösung einer alkalischen Substanz, insbesondere Calciumhydroxid, gereinigt. Wenn Brennstoffe und Rohstoffe wenig Schwefel enthalten, ist eine Gaskonditionierung ohne alkalische Substanzen völlig ausreichend. Das Abgas ist nun entstickt und enthält wenig bis kein Ammoniak. Es kann so im Direktbetrieb problemlos dem Filter 3 zugeführt werden. Im Normalbetrieb wird es in die Mühle 1 geführt.

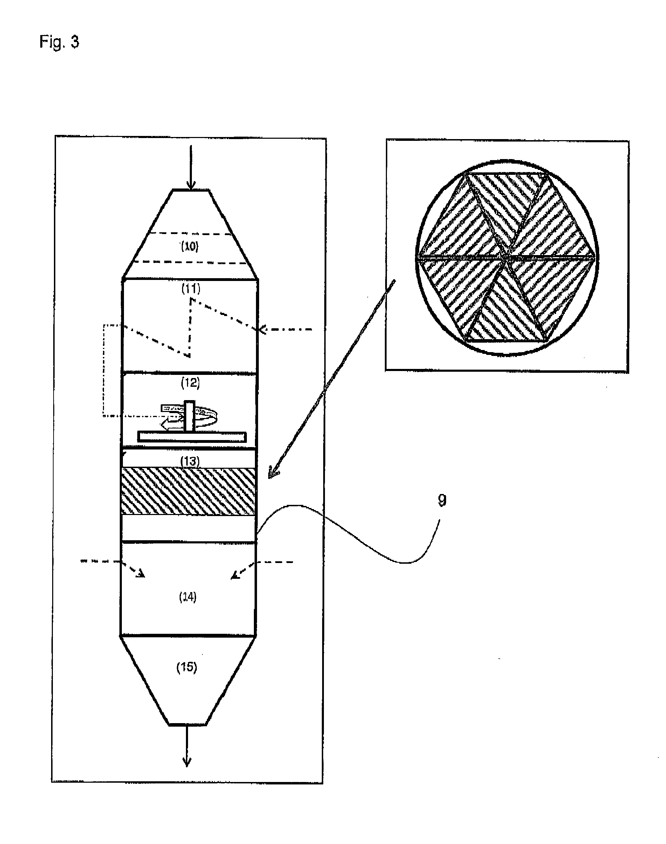

Figur 3 zeigt den Aufbau der bevorzugten Vorrichtung 8 zur Gaskonditionierung und katalytischen Oxidation und eine Ausschnittvergrößerung des Oxidationskatalysators. Die Vorrichtung 8 ist in einem Gehäuse 9 untergebracht. An dessen Eingangsende ist ein Ausgleichsverteiler 10 vorgesehen, der für eine homogene Gas- und Staubeinströmung sorgt. Das Abgas passiert sodann einen Wärmetauscher 11, in welchem es einen Teil seiner Wärme an die Druckluft zur Reinigung des Katalysators abgibt, die dadurch vorgeheizt wird. Die vorgeheizte Druckluft wird einer rotierenden Einheit 12 zugeführt, die von Zeit zu Zeit die Anströmflächen des nachfolgenden Oxidationskatalysator 13 freibläst. Wie in der Ausschnittvergrößerung zu sehen, wird der Oxidationskatalysator 13 in Kassetten gehalten, deren Querschnitt einem gleichseitigen Dreieck mit einer an den Radius des Gehäuses 9 angepassten Seitenlänge entspricht. Im Anschluss an den Oxidationskatalysator 13 folgt die Gaskonditionierung 14. Je nach Schwefelgehalt in den Rohstoffen und Brennstoffen ist in dem zur Gaskonditionierung eingedüsten Wasser für die Gasreinigung zusätzlich eine alkalische Substanz enthalten. Im Anschluss an die Gaskonditionierung 14 ist hier noch eine Staubabscheidung 15 angeordnet.

Das Abgas, welches das Gehäuse 9 verlässt, ist weitgehend von Schadstoffen befreit. Die Stickoxide sind in der SNCR entfernt worden, Ammoniak und ggfs. Schwefeloxide wurden in der SCO und Gaskonditionierung zu Stickstoff und CaSO_{3/4} umgewandelt bzw. entfernt. Andere oxidierbare Schadstoffe wie z.B. Quecksilber wurden in eine im Filter 3 leichter abtrennbare Form überführt bzw. durch Oxidation in unschädliche Substanzen umgewandelt.

## Patentansprüche

1. Verfahren zur Reinigung von Abgas aus der Herstellung von Zementklinker in einem Drehrohrofen (6), bei dem Rohstoffe in einer Mühle (1) zu Rohmehl gemahlen werden, das Rohmehl in einem Vorwärmer (5) mit Abgas aus dem Drehrohrofen (6) im Gegenstrom vorgewärmt und optional vorkalziniert wird, das vorgewärmte und ggfs. vorkalzinierte Rohmehl dem Drehrohrofen (6) zugeführt und im Drehrohrofen (6) zu Zementklinker gebrannt wird, das Abgas aus dem Drehrohrofen (6) vor dem Eintritt in den Vorwärmer (5) einer selektiven, nicht-katalytischen Reduktion mit einem Reagenz, welches Ammoniak bereitstellt, entstickt wird, **dadurch gekennzeichnet, dass** das Abgas aus dem Vorwärmer (5) einer katalytischen Oxidation (13) und Gaskonditionierung (14) unterzogen wird.

2. Verfahren gemäß Anspruch 1, **dadurch gekennzeichnet, dass** als Gaskonditionierung (14) eine Gasreinigung mit alkalischen Substanzen, vorzugsweise Calciumhydroxid, durchgeführt wird.

3. Verfahren gemäß Anspruch 1 oder 2, **dadurch gekennzeichnet, dass** als Reagenz wässrige Ammoniak- oder Harnstofflösung verwendet wird.

4. Verfahren gemäß einem der Ansprüche 1 bis 3, **dadurch gekennzeichnet, dass** die Zugabe von Reagenz so bemessen wird, dass die Stickoxidkonzentration im Abgas nach der nicht-katalytischen Reduktion unterhalb von 450 mg/m³, vorzugsweise unterhalb von 200 mg/m³, insbesondere unterhalb von 150 mg/m³, liegt.

5. Verfahren gemäß einem der Ansprüche 1 bis 4, **dadurch gekennzeichnet, dass** das Molverhältnis von Ammoniak zu Stickoxiden in der SNCR auf 1,1 bis 2,5, vorzugsweise auf 1,3 bis 1,6, eingestellt wird.

6. Verfahren gemäß einem der Ansprüche 1 bis 5, **dadurch gekennzeichnet, dass** die Zugabe von Reagenz an einer Stelle erfolgt, bei der die Abgase eine Temperatur von 800 bis 1000 °C, vorzugsweise von 830 bis 950 °C haben.

7. Verfahren gemäß einem der Ansprüche 1 bis 6, **dadurch gekennzeichnet, dass** Querschnitt und Art des Oxidationskatalysators und die Strömungsgeschwindigkeit des Abgases durch den Katalysator so gewählt werden, dass die Ammoniak-Konzentration im Abgas nach der katalytischen Oxidation unterhalb von 30 mg/m³, vorzugsweise unterhalb von 10 mg/m³, liegt.

8. Verfahren gemäß einem der Ansprüche 1 bis 7, **dadurch gekennzeichnet, dass** der Oxidationskatalysator (13) von Zeit zu Zeit, typischerweise alle 0,2 bis 2 Stunden, mittels Druckluft aus einer rotierenden Einheit (11) freigeblasen wird.

9. Verfahren gemäß Anspruch 8, **dadurch gekennzeichnet, dass** die rotierende Einheit von der Druckluft angetrieben wird.

10. Verfahren gemäß Anspruch 8 oder 9, **dadurch gekennzeichnet, dass** die Druckluft vorgeheizt wird, vorzugsweise auf 150 bis 300 °C, insbesondere auf 170 bis 240 °C.

11. Vorrichtung zur katalytischen Oxidation (13) und Gaskonditionierung (14), welche in einer Anlage zur Herstellung von Zementklinker umfassend eine Mühle (1), in der Rohstoffe zu Rohmehl gemahlen werden, einen Vorwärmer (5), in dem das Rohmehl mit Abgas aus einem Drehrohrofen (6) im Gegenstrom vorgewärmt und optional vorkalziniert wird, den Drehrohrofen (6), in dem das vorgewärmte und ggfs. vorkalzinierte Rohmehl zu Zementklinker gebrannt wird, und einen Abschnitt zwischen dem Drehrohrofen (6) und dem Vorwärmer (5), in dem Stickoxide mit einem Reagenz, welches Ammoniak bereitstellt, reduziert werden, zwischen Mühle (1) und Vorwärmer (5) angeordnet ist.

12. Vorrichtung gemäß Anspruch 11, **dadurch gekennzeichnet, dass** katalytische Oxidation (13) und Gaskonditionierung (14) in einem Gehäuse (9) angeordnet sind.

13. Vorrichtung gemäß Anspruch 11 oder 12, **dadurch gekennzeichnet, dass** der Oxidationskatalysator Titandioxid mit 1 bis 4 Gew.-% Vanadiumpentoxid und/oder Wolframtrioxid enthält, vorzugsweise dotiert mit einem oder mehreren von Edelmetallen, Kupfer und Magnesium.

14. Vorrichtung gemäß einem der Ansprüche 11 bis 13, **dadurch gekennzeichnet, dass** der Oxidationskatalysator aus Elementen besteht, die in Kassetten gehalten sind, deren Querschnitt gleichseitige Dreiecke sind, wobei die Seitenlänge der Kassetten an den Radius des Gehäuses (9) angepasst ist.

15. Vorrichtung gemäß gemäß einem der Ansprüche 11 bis 14, **dadurch gekennzeichnet, dass** am Gaseintritt in das Gehäuse (9) ein Ausgleichsverteiler (10) angeordnet ist.

16. Vorrichtung gemäß gemäß einem der Ansprüche 11 bis 15, **dadurch gekennzeichnet, dass** vor dem Gasaustritt aus dem Gehäuse (9) eine Staubabführung (15) angeordnet ist.

17. Vorrichtung gemäß gemäß einem der Ansprüche 11 bis 16, **dadurch gekennzeichnet, dass** eine rotierende Einheit (12) mit versetzten und im Querschnitt variierenden Düsen zur Einführung von Druckluft vorhanden ist, mittels welcher der Katalysator (13) durch die Druckluft freigeblasen werden kann.

18. Vorrichtung gemäß Anspruch 17, **dadurch gekennzeichnet, dass** ein Wärmetauscher (11) vorgesehen ist, mit welchem die Druckluft vorgeheizt wird, vorzugsweise durch das Abgas.
